# EUROPEAN PATENT APPLICATION

(11) **EP 4 712 030 A1**
(43) Date of publication of application: **18.03.2026**
(21) Application number: 25202581.2
(22) Date of filing: 16.09.2025
(51) Int. Cl.: G06T 11/00

(54) **SURFACE DESIGN IMAGE GENERATION**

(30) Priority: 17.09.2024 DE 102024126826
(71) Applicant: Matthews International GmbH, 48691 Vreden (DE); Saueressig Vreden GmbH & Co. KG, 48691 Vreden (DE)
(72) Inventor: Schmidt, Daniel, 48691 Vreden (DE)
(74) Representative: Holzwarth-Rochford, Andreas

(57) **Abstract**

A computer implemented method for generating an image of an ornamental surface, surface structure and/or a surface model of one or more target materials, the method comprising:
• Providing an input to into one or more trained machine learning and/or artificial intelligence models, the input comprising one or more parameters and a guidance input; and
• Generating, by the one or more trained machine learning and/or artificial intelligence models, a generated image based at least in part on the one or more parameters and the guidance input, wherein at least one of the one or more trained machine learning and/or artificial intelligence models comprises or is associated with at least one diffusion model.

## Description

The present disclosure is directed to surface generation, in particular to computer implemented generation of images, of natural looking surfaces for the production of printing and/or embossing tools, for example cylinders and/or rollers and/or the use in digital printing.

When generating surfaces of a target material, respective surfaces of for example natural materials, like wood or stone, need to be digitized to generate an image that can be used for the production of respective printing and embossing tools, such as rollers and/or cylinders of or for a printing and/or embossing device.

A drawback of the current methods is that before digitization an extensive preparation of the material surface is necessary. For example, in case of wood, the wooden surface is sawn and sanded before digitization. Over the last decades many different surfaces or ornaments of different furnished materials have been digitally acquired.

Machine learning (ML) and/or artificial intelligence (Al) tools enable improvement, acceleration and/or automatization of many processes in case sufficient training data is at hand.

The international patent application WO 2021/144728 A1 proposes employing a generative system and respective methods to produce digital ornaments or surfaces of different furnished materials that can be used for printing.

However using ML or AI methods bears always the risk of hallucinations or anomalies as well as logical inconsistencies in the produced images that could be recognized as artifacts. The present disclosure therefore has the task to reduce errors in ML or AI methods-based ornaments or surfaces of (furnished) materials.

This task is solved in an aspect by a computer implemented method for generating an image of an ornamental surface, surface structure and/or a surface model of one or more target materials, the method comprising:
- providing an input to into one or more trained machine learning and/or artificial intelligence models, the input comprising one or more parameters and a guidance input; and
- generating, by the one or more trained machine learning and/or artificial intelligence models, a generated image based at least in part on the one or more parameters and the guidance input, wherein at least one of the one or more trained machine learning and/or artificial intelligence models comprises or is associated with at least one diffusion model.

In one embodiment the one or more trained machine learning and/or artificial intelligence models comprise at least two trained machine learning and/or artificial intelligence models, preferably five or at least five models.

Additionally or alternatively at least one first of, preferably three of, the one or more trained machine learning and/or artificial intelligence models can comprise or may be at least one first of, preferably three of, the one or more trained machine learning and/or artificial intelligence models comprises or is a diffusion model, in particular an image diffusion model, especially a text to image diffusion model, preferably Stable Diffusion XL, SDXL, and/or a FLUX diffusion model.

In one embodiment the at least two trained machine learning and/or artificial intelligence models can be arranged in a cascade, wherein preferably the cascade comprises at least one block, especially two blocks, of a diffusion model, in particular an image diffusion model, preferably SDXL, and/or a FLUX model and an GAN model connected in series and/or the cascade comprises at least one block of two diffusion models, in particular an image diffusion models, preferably SDXL, and/or a FLUX models connected in series, and/or wherein cascade comprises the following series connection of the models: first diffusion model, in particular an image diffusion model, preferably SDXL, and/or a FLUX model, second diffusion model, in particular an image diffusion model, preferably SDXL, and/or a FLUX model, first GAN model, third diffusion model, in particular an image diffusion model, preferably SDXL, and/or a FLUX model, second GAN model.

In another embodiment generating, by the one or more trained machine learning and/or artificial intelligence models, a generated image based at least in part on the one or more parameters and the guidance input can comprise: denoising of the guidance input; and/or encoding, preferably using a Variational Autoencoder ,VAE, prior to feeding the guidance input into the one or more trained machine learning and/or artificial intelligence models, in particular the least one diffusion model; and/or decoding the generated image, which is preferably output from the one or more trained machine learning and/or artificial intelligence models, in particular the least one diffusion model, especially using a/the VAE.

Additionally, the denoising a denoising value can be set in in the range of 5% to 90%, preferably 30% to 80%, more preferably 30% to 50%, and/or the denoising value can be set to be one of the following: 10%, 20%, 30%, 35%, 40%, 45%, 50%, 60%, 70% and/or 80%, wherein preferably the denoising value determines the degree up to which extend the guidance input can be modified; and/or the denoising value is linked and/or correlated to a guidance strength variable that is preferably one of the one or more parameters and/or in the range of 35% to 80%, more preferably is 50 %.

In one embodiment the generating, by the one or more trained machine learning and/or artificial intelligence models, a generated image based at least in part on the one or more parameters and the guidance input can comprise:
- a first denoising and/or first refining of the guidance input, the first denoising and/ first refining having preferably a first denoising value and/or range of 30 to 40%, and/or
- a first generating of new details that are added and/or that modify the guidance input based at least on the one or more parameters to produce the generated image, wherein preferably the first denoising and/or refining and/or the first generating is fully or partly conducted and/or provided by a first trained machine learning and/or artificial intelligence model of the one or more trained machine learning and/or artificial intelligence models, the first trained machine learning and/or artificial intelligence model preferably being a diffusion model, in particular an image diffusion model, especially a text to image diffusion model, preferably a SDXL model and/or a FLUX model and/or being trained and/or finetuned on low resolution images of samples of surfaces and/or surface structures of the one or more target materials.

Additionally or alternatively generating, by the one or more trained machine learning and/or artificial intelligence models, a generated image based at least in part on the one or more parameters and the guidance input can comprise:
- a first resizing and/or first upscaling of the generated image to a higher resolution, in particular medium resolution;
- a second refining, preferably by a second denoising, of the generated image, the second denoising having preferably a second denoising value in the range of 40 to 50%; and/or
- generating new details that are added and/or that modify the generated image based at least on the one or more parameters of the input; wherein preferably the first resizing and/or first upscaling and/or the second refining is fully or partly conducted and/or provided by the first and/or a second trained machine learning and/or artificial intelligence model of the one or more trained machine learning and/or artificial intelligence models, the second trained machine learning and/or artificial intelligence model preferably being a diffusion model, in particular an image diffusion model, especially a text to image diffusion model, preferably a SDXL model and/or a FLUX model and/or being trained and/or finetuned on patches, regions and/or parts of medium resolution images of samples of surfaces and/or surface structures of the one or more target materials.

Additionally or alternatively generating, by the one or more trained machine learning and/or artificial intelligence models, a generated image based at least in part on the one or more parameters and the guidance input can comprise:
- a second resizing and/or second upscaling of the generated image, preferably by means of an upscaler model, wherein preferably the second resizing and/or second upscaling is fully or partly conducted and/or provided by one or more or all of the previous trained machine learning and/or artificial intelligence model, in particular, the first and/or the second trained machine learning and/or artificial intelligence model and/or provided by a third trained machine learning and/or artificial intelligence model of the one or more trained machine learning and/or artificial intelligence models, the third trained machine learning and/or artificial intelligence model preferably being a GAN model and/or being trained on images of samples of surfaces and/or surface structures of the one or more target materials.

Additionally or alternatively generating, by the one or more trained machine learning and/or artificial intelligence models, a generated image based at least in part on the one or more parameters and the guidance input can comprise:
- a third refining of the generated image based at least on the one or more parameters of the input, wherein preferably the third refining is fully or partly conducted and/or provided by one or more or all of the previous trained machine learning and/or artificial intelligence model, in particular, the first, the second and/or the third trained machine learning and/or artificial intelligence model and/or provided by a forth trained machine learning and/or artificial intelligence model of the one or more trained machine learning and/or artificial intelligence models, the fourth trained machine learning and/or artificial intelligence model preferably being a diffusion model, in particular an image diffusion model, especially a text to image diffusion model, preferably a SDXL model and/or a FLUX model and/or being trained and/or finetuned on patches, regions and/or parts of highest available and/or final required resolution images of surface samples of the one or more target materials.

Additionally or alternatively generating, by the one or more trained machine learning and/or artificial intelligence models, a generated image based at least in part on the one or more parameters and the guidance input may comprise:
- a forth and/or final refining, in particular an error handling, especially a pixel error correction, of the generated image, in particular to correct artifact and/or pixel errors occurring due to encoding and/or decoding process(es), wherein preferably the forth and/or final refining is fully or partly conducted and/or provided by one or more or all of the previous trained machine learning and/or artificial intelligence models, in particular, the first, the second, the third, the forth trained machine learning and/or artificial intelligence model and/or provided by a fifth trained machine learning and/or artificial intelligence model of the one or more trained machine learning and/or artificial intelligence models, the fourth trained machine learning and/or artificial intelligence model being a GAN model and/or being trained and/or finetuned on encoded/decoded and raw images of samples of surfaces and/or surface structures of the one or more target materials, wherein raw images especially comprise original images, which preferably have not undergone any preprocessing and/or encoding and/or decoding.

The guidance input can comprise or consist of one or more guidance images; and/or the guidance input may comprise one or more characteristics, properties and/or basic features of one or more structures, ornaments and/or patterns of the target surface material.

Additionally or alternatively, the one or more guidance images and/or the guidance input may comprise one or more characteristics, properties and/or basic features, the basic features in particular comprising ornaments, one or more patterns, one or more geometrical structures, lines, geometrical features and/or figures, such as circles, ellipses, wave functions and/or the like, and/or local deformations and/or anomalies, wherein the basic features preferably match and/or correspond to characteristics and/or properties of to the one or more target materials.

Additionally or alternatively, the guidance input can further comprise: one or more geometrical relations and/or positions of the one or more basic features, noise added to at least one of the one or more characteristics, properties and/or basic features and/or color values, in particular the desired color output for the generated image.

In one embodiment, the one or more guidance image can be a square image, especially having a resolution of or at least of 1024*1024 pixels or a non-square image, in particular a rectangular image with especially an aspect ratio of 2:3, 3:2, 3:4, 4:3, 16:9, 9:16 and/or the like or having a resolution of at least or of 1536*640 pixels.

The one or more parameters may comprise one or more characteristics, properties and/or basic features of one or more structures, ornaments and/or patterns of the target surface material of the one or more target materials and/or one or more target material specifics, wherein the one or more target material specifics preferably comprise at least one of: material type, such as wood or stone, material combination, color, treatment, furnishing, patterns and/or a combination thereof.

In one embodiment the computer implemented method further may comprise generating a description, preferably from the one or more parameters and/or preferably by combining of one or more parameters and/or one or more keywords, the one or more keywords especially describing one or more parameters, and preferably employing the description in the one or more trained machine learning and/or artificial intelligence models, wherein the description preferably encompasses on or more keywords.

One or more materials of the one or more target materials can comprise one or more of: a at least partly or fully processed, furnished and/or treated natural or synthetic material, a natural or synthetic material with at least in part or fully processed, furnished and/or treated surface and/or raw natural or synthetic material and/or a combination thereof, wherein preferably the one or more target materials comprise stone and/or wood.

In one embodiment the computer implemented method can further comprise providing
- a user interface, UI, preferably in form of a graphical user interface, GUI, which is configured to receive and/or generate the guidance input, in particular by means of an algorithm that is configured to generate guidance images from user inputs, and to define one or more parameters for the input;
- a/the user interface comprises a preview function for previewing and/or for comparing generated images provided by one of the one or more machine learning and/or artificial intelligence model, in particular the first, the second, the third, the fourth and/or the fifth machine learning and/or artificial intelligence model and the guidance input, in particular the guidance image; and/or
- a/the user interface comprises an upload and/or download function for the generated image.

In one embodiment the computer implemented method may further comprise:
- Postprocessing, wherein the postprocessing is configured to establish compatibility for further use of the generated image by cleaning artifacts, preferably with GAN-model trained on encoded, decoded and/or raw surfaces images
- Providing the generated image to a database comprising a selection of one or more generated images, preferably produced in accordance with the method of any one of the previously describe embodiments;
- Providing the generated image or at least one generated image of the selection of one or more generated images, preferably upon approval and/or selection by a user and/or automatically, especially from the database, to a printing and/or embossing setup, in particular a printing and/or embossing and/or digital printing machinery, to enable a production of materials and/or one or more products comprising one or more materials, preferably different to the one or more target materials, featuring a surface in accordance or associated with the generated image and/or a surface of the one or more target images, wherein especially the one or more products comprising: products with a decorative character, such as paper, cardboard, plastic film and/or foil, vinyl, flooring, e.g. PVC flooring, furniture, wallpaper, tiles, wood products, glass and/or digitally printed products on a wall, fabric, carpets, metal foil and/or plate; and/or
- Providing the generated image or at least one generated image of the selection of one or more generated images, preferably upon approval and/or selection by a user and/or automatically, especially from the database, to a production machinery and/or production facility for production of rollers for printing and/or embossing machinery, in particular a printing and/or embossing setup.

Additionally or alternatively, the computer implemented method may further comprise: employing the generated image for the production of embossing and/or printing tools, in particular rollers for a printing and/or embossing setup.

In a further aspect the task is solved by a data processing device and/or system comprising a processor configured to perform any one of the examples and/or embodiments of the previously described method.

In another aspect the task is solved by a computer program product comprising instructions which, when the program is executed by a computer and/or computing system, cause the computer and/or computing system to carry out any one of the examples and/or embodiments of the previously described method.

Furthermore, the task is solved by a computer-readable medium comprising instructions which, when executed by a computer and/or computing system, cause the computer and/or computing system to carry out any one of the examples and/or embodiments of the previously described method.

Employing a text to image diffusion model, in particular with a guidance input, has the surprising effect that the accuracy of the generated images with respect to surfaces and/or surface structures of a target material is significantly improved. Using a text to image diffusion model therefore reduces computing time and resources as well as reduces the input complexity.

Using a guidance input, in particular a guidance image, in combination with text to image diffusion model has the advantage of improving the generating process of images that can be used for production of printing and/or embossing tools. It saves computing power and resources as the number of re-iterations to create a final generated image is reduced because the guidance input serves guide rail for the one or more machine learning and/or artificial intelligence models.

Further, the guidance input, in particular the guidance image, helps to create a consistent structure throughout the generated image. Thus, unwanted hallucination or artifacts produced by the one or more machine learning and/or artificial intelligence models are reduced or even completely prevented.

The guidance input, in particular the guidance image, allows to reinforce specific aspects, such as one or more characteristics, properties and/or basic features of the surface of one or more target materials.

Using a cascade of one or more machine learning and/or artificial intelligence models improves the overall result by reducing model complexity, enabling tailored training and an increased accuracy, in particular of the individual generating steps conducted by the respective models.

Using one or more machine learning and/or artificial intelligence models, for example, in the cascade, allows to adjust them via specific training data sets (e.g. different aspects of a surface and/or different image resolution) and/or model type (e.g. image to image or text to image model) to their specific task. This further increases accuracy, reduces overall complexity and saves computing resources and time.

In general the above described and used trained one or more machine learning and/or artificial intelligence models need to be trained. The training comprises in general two steps:
1. Data preparation
2. Training phase

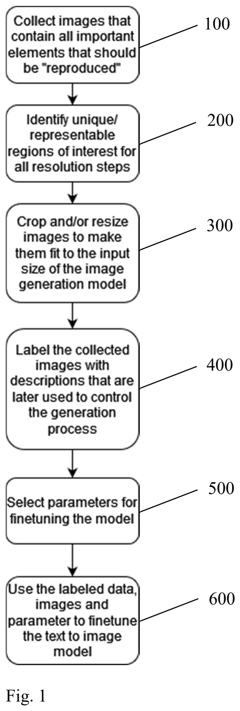

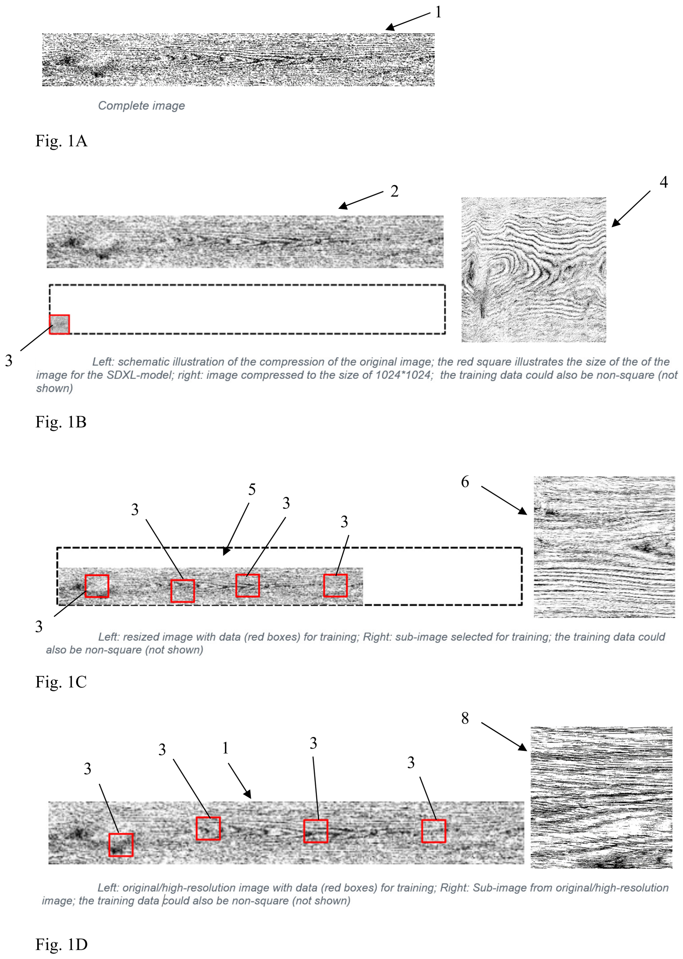

The general training and data preparation is described further below with respect to Figures 1 with a distinct example given for SDXL models in figures 1A to 1D.

With respect to the disclosure low resolution images can contain the complete final structure or smaller cutouts of the training data but with a lower resolution compared to high resolution. In general, low resolution can relate to a pixel per inch (ppi) range of 14 to 150, in particular to 14 to 100 ppi for height and/or 50 to 150 ppi for width of an image. Medium resolution can relate to a ppi range 100 to 150 ppi, in particular for both height and width. Heigh resolution, highest available and/or final required resolution can relate to a ppi range >150 ppi, in particular 300 ppi.

Further features and advantages of the claimed subject matter will become apparent from the following description of an embodiment of the claimed subject matter with the help of the enclosed figures, wherein
- Fig. 1: shows a flow diagram on the training of the one or more machine learning and/or artificial intelligence models employed in this disclosure.
- Figs 1A to 1D: show images and image processing step for training one or more machine learning and/or artificial intelligence models.
- Fig. 2A: shows a flow diagram of one embodiment in accordance with the disclosure, where a cascade of trained machine learning and/or artificial intelligence models are applied to produce the generated image.
- Fig. 2B: shows an exemplary guidance input in form of a guidance image generated by a user interface (UI)
- Fig. 2C: shows an alternative embodiment of the method of Fig. 2A.
- Fig. 3A to 3C: show a pictures of a graphical user interface (GUI) to generate the guidance image as well as to define one or more parameters for the input and respective options to generate low- and high-resolution versions of the generated image by triggering the respective steps of the method disclosed herein.
- Fig. 4: shows the graphical user interface of figure 3A to 3C with the adjustment of a guidance strength controller, which can define the denoising value and/or the denoising value range that can be applied during image generation.
- Fig. 5: shows the graphical user interface of figures 3A to 3C and figure 4 with a low-resolution version of the generated image.

Figure 1 demonstrates an exemplary procedure to train the one or more machine learning and/or artificial intelligence models that are employed in this disclosure. In a first step 100 images are collected that contain all important characteristics and/or properties that should be reproduced and/or associated with the one or more target materials, of which raw, processed, furnished and/or treated surfaces and/or surface structures that are to be reproduced by the generated image.

For example, the data collection of images can be conducted as follows: Collect training data (Figure 1A, where a complete original image 1 is shown; data from previous scanned material e.g. wood and/or stone) and label data with characteristics that will be important for later generation of images. Labels can correspond to or be properties and/or characteristics of the respective target material surface, such as (in case of wood, for example) color, structure, distance of annular rings, grain size and/or knotholes.

The training data should to have the resolution of the final image that should be produced or to be downscaled for the resolution steps that should be trained. The sizes of the images can vary. In such case the images of the training data be adjusted to fit in the correct resolution, for example, with respect to a standard training data size (e.g. 1024* 1024 Pixel or 1536*640 px).

In a second step 200, unique and/or typical patches, regions and/or parts that feature respective one or more characteristics, properties and/or basic features and/or one or more material specifics of the one or more target material surfaces are identified. This is preferably applied to all available, needed and/or required image resolutions.

In third step 300, the collected images can be resized (e.g. cropped, downsize and/or cut out) to fit a certain standard resolution and image ratio that can be employed by the respective one or more machine learning and/or artificial intelligence models. In this step, alternatively or additionally the collected images can also be subject to a normalization, for example with respect to color values, brightness and/or contrast and/or the like.

In step 400, the collected images are labeled with descriptions, the description, for example, comprising one or more of characteristics, properties, basic features but also material type, furnishing, processing and/or treatment type, color and or the like. After the step of labeling the images, the labeled images can be fed into the respective machine learning and/or artificial intelligence models to train them (not shown). Thereby, models can be created that distinctively are subject to one target material or certain mixture of one or more target materials and/or to distinctive image quality, in particular different resolutions, such as low medium and high resolutions.

In addition in a further step 500 one or more distinctive specifications of the model and/or the labeled images can be adjusted to finetune the model, in particular, for example to increase robustness and to reduce hallucination risk of the model. The one or more specifications can be, for example, one or more training parameters, where the one or more training parameters can be selected and/or adjusted to best suit the visual evaluation of the wood experts.

The following list gives an overview of specifications that can be used for training and/or refining different models, where the examples in parens are given in relation to the generation of an image that shows and/or emulates a wooden surface:
Training a GAN model:
   - Architecture of the model, such as number of layers, which types layers etc.
   - Image resolution used for training, such 1024* 1024px or other
   - Optimizer , which can minimize the loss function of a model during the training process, in order to improve the model's performance and accuracy
Training a text to image diffusion model:
   - Prompts for all image samples used for training, e.g. Words used to train the models (e.g." *golden rustic oak with knotholes, flamed grain", "oak, dark brown, rustic, knotholes, flamed grain, medullary rays, cracks ", "oak type1 " and*/*or "oak type2*")
   - Resolution used for training, such 1024*1024px or other
   - Optimizer , which can minimize the loss function of a model during the training process, in order to improve the model's performance and accuracy
   - Learning Rate, e.g. how fast the model should learn
   - Epochs, e.g. how often the complete dataset should be used for training
Generating/Refining an image with a Text2Image Diffusion Model:
   - Prompt, e.g. words used to train the models (e.g. golden rustic oak with knotholes, flamed grain)
   - CFG Scale (classifier-free guidance scale) a value how "strong" the prompt should be followed
   - Steps used to denoise the image
   - Sampler, different samplers can calculate differently how the image is denoised

For example, to create a first trained machine learning and/or artificial intelligence model, the images can be compressed to 1024*1024 Pixels (Figure 1B) and can be used to fine-tune a image diffusion model, such as an SDXL model or create a so-called Lora (Low-Rank Adaptation of Large Language Models) for the model together with the labels created. The images can be used teach and to fine-tune a 1st SDXL model / Lora. It is also possible to us non-square compressed images (e.g. 1536*640 px), which improves the quality in the production of the generated images. The compressing can be done to use the data in the Standard-SDXL libraries. The compression reduces the details in the dataset but keeps the primary features, such as characteristics, properties and/or basic features, intact. Specifically, returning to figure 1B, on the left a schematic illustration of a compression image 2 of the original image 1 vis shown. The box 3 illustrates the size of the of the image for training the image diffusion model, such as the SDXL-model. On the right: a compressed version 4 of the image data of box 3 is shown, where the compression is to the size of 1024*1024. However, also other sizes, in particular non-square sizes, are possible.

For an exemplary creation of a second trained machine learning and/or artificial intelligence model, the original image can be compressed to a size that lays somewhere in the middle of the original size and 1024*1024px. From these images, sub-images of the size of 1024* 1024px (or non-square e.g. 1536*640 px) can be selected (Figure 1C) and/or be used to train a 2nd fine-tune/lora of the model. In Figure 1C this is demonstrated on one example: On the left a resized image 5 (original size in dashed lines) with data in boxes 3 for training is shown. On the right one example of a corresponding sub-image 6 selected for training is shown. In this example the training data is in square boxes, but also non-square boxes are possible.

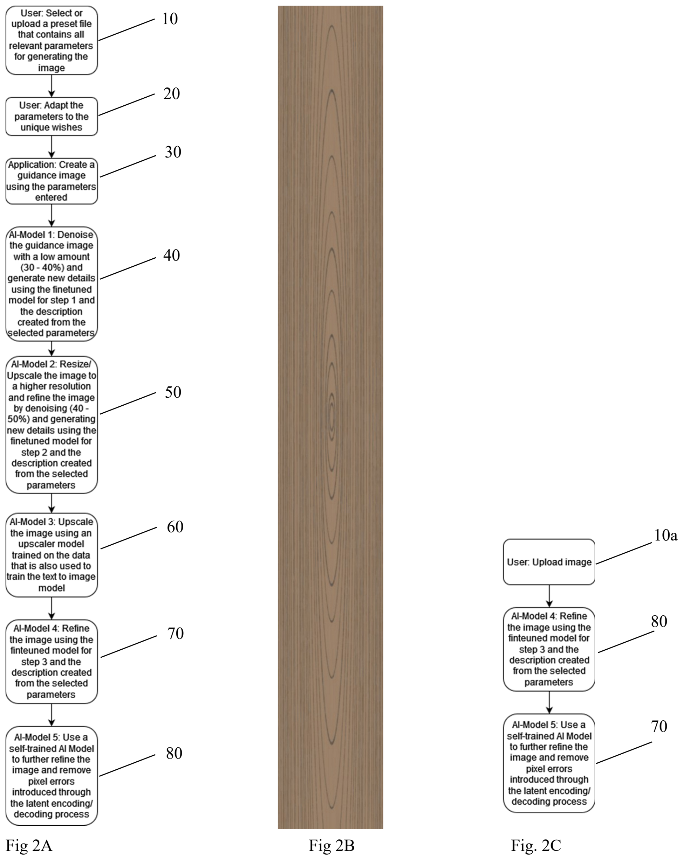

In one embodiment, for the training of a further machine learning and/or artificial intelligence model, e.g. the fourth trained machine learning and/or artificial intelligence model that is used in the embodiment of figure 2, sub-images can be selected from the original image with the size of 1024*1024px (or non-square e.g. 1536*640 px) (Figure 1D). This is shown in figure 1D on the left: An original/high-resolution image 1 with data in boxes 3 for training are given and on the right an example of a corresponding sub-image 8 (from one of the boxes) of the original/high-resolution image 1 is shown, where the training data could also be non-square (not shown).

Figure 2A shows a flowchart that describes one embodiment of the computer implemented method for generating surface images in accordance with this present disclosure.

Before the actual generation of an image is conducted the input needs to be defined in one or more first steps 10 to 30.

In step 10, a user may select one or more parameters that form the input to the one or more trained machine learning and/or artificial intelligence models (herein after AI models). Alternatively or additionally, the user, in this case, but also alternatively a computer or a server may provide a preset file that contains all relevant parameter(s), which could be needed as input for the one or more AI models.

In a further step 20 the user may have the opportunity to adapt the preset file to individual wishes. Alternatively or additionally, in step 20 also a computing device may adjust the preset file parameters in view of the product and/or other material with which the generated image is to be used to emulate a surface associated with the one or more target materials.

In step 30, the guidance input in form of a guidance image can be created based on further user input using a respective user interface configured to adapt one or more properties of the guidance image. Alternatively or additionally, the one or more input parameters can be used to create a guidance image (as exemplary described further below). In that case the guidance image can be created without further user input. For example, the guidance image can be created using a random generator that uses the one or more parameters as boundary input and/or other input. Additionally or alternatively the guidance image could be provided as an image file, for example, showing a target material surface, based on which the generated image can be created. Finally, also the combination of the before described methods for creating a guidance image can be used.

Once a guidance image and the one or more input parameters are defined, they are provided as input to one or more AI models. In the case of the embodiment of figure 2, up to five AI models can be used. The AI models are arranged in a cascade. In the cascade the size and/or resolution of the generated image may follow an increasing gradient, e.g. from low resolution to high resolution.

In step 40 a first AI model is used to denoise the guidance image. The denoising can be achieved by diffusion-based image generation system, which may be part of the first trained AI model. In that sense, denoising defines the degree of magnitude, based on which parts of the guidance image can be altered, modified and/or edited. A denoising value can be defined for the first AI model. For the first AI model that the denoise value can be in the range of 30 to 40%.

In addition to the denoising of the guidance image the first AI model may also generate new details based on one or more parameters and/or the description generated from the one or more parameters of the input to generate a first version of the generated image.

For example, a 1024*1024px or non-square compressed images, e.g. 1536*640 px, can be generated through a text input with the expected one or more parameters and the guidance image as an input. The image contains the complete structure of the final image and can be the basis for the further image generation.

In step 50, the generated image is forwarded or passed to a second AI model. The second AI model can be configured to resize and/or upscale the generated image to a high-resolution, which may be required for further refinement of the generated image.

Additionally or alternatively, the second AI model further refines the generated image by denoising, preferably using an increased denoising value in the range of 40 to 50 %.

As with the first AI model, the second AI model may also generate new details based on one or more parameters and/or the description generated from the one or more parameters of the input to generate a second version of the generated image, that is not only resized and/or upscaled but also includes further details with respect to one or more characteristics, properties and/or basic features of the surface of one or more target materials that are to be emulated.

In step 60 of the cascade, a third AI model can be employed that can be used to further upscale the generated image, in particular the second or first version of the generated image. The third AI model can comprise and/or employ an, preferably self-trained, upscale model, which can be trained on the image data collected for training the first and/or second AI model. In particular, the third AI model can be a Generative Adversarial Network (GAN) model.

In contrast to the third AI model, the first and/or second AI models can comprise and/or employ a text to image diffusion model, such as SDXL.

Additionally, in step 70, a fourth AI model could be employed to refine the surface model represented by second version of the generated image further. To do that, the fourth AI model is applied on the second version of the generated image and uses as input the one or more parameters and the description created based thereon.

Additionally or alternatively, in step 80, a fifth AI model can be applied for a further refinement of the generated image (e.g. the third version generated in step 70) and to remove pixel errors introduced due to latent encoding and/or decoding processes. As with the third AI model, the fifth AI model can also be a GAN model that could be in this case trained on encoded and/or decoded images of samples of surfaces and/or surface structures of the one or more target materials.

The resulting generated image, which can be a RGB image for example, can comprise one or more artifacts that can be managed via post processing. For example, the generated image can comprise artifacts from a Variational Autoencoder of one of the AI models, in particular a diffusion model, that make it difficult to generate printing separations for the further use of the generated image for roller or embossing tool production (e.g. rollers for printing and embossing machines) or the direct application on and/or employing respective printing and/or embossing machines. One solution can be to use a model, such as a GAN model that were created to remove these kinds of artifacts and generate a "cleaner" version of the image. The Variational Autoencoder (VAE) can be part of a diffusion model and can be used to feeding an image to the diffusion model, which preferably works on encoded images. Therefore, the training images as well as an image that is refined by denoising and generation also can and/or should be encoded and then later on can or should be decoded to be available as a proper image again.

A simple example of a guidance image as guidance input is shown in figure 2B. In this example, the guidance image is drawn algorithmically for example with ellipses to emulate annual rings in a wooden surface structure. Such guidance input can be created by user using a user interface (UI) embedded and/or linked to an algorithm for creation of guidance images. UI and/or algorithm could be implemented in the method to create generated images. For example, a user can select the width, distance, randomness and many characteristics, properties and/or basic features to control the results. The guidance image cam further be made more natural by adding noise and being locally deformed by the selection of the user.

In figure 2C a further embodiment of the present disclosure is shown, where a high-resolution image of an example surface of the one or more target materials is uploaded and/provided as guidance input in step 10a. Such a high-resolution image could be for example an image of a real-world example of the one or more target materials that may show and/or exhibit details, in particular geometrical details, and/or a pattern that the user desires to reproduce and/or to modify via the image generation on. In such case the generated image can be directly produced by the AI models, for example, AI models four and five, which are trained on respective high resolution images training data.

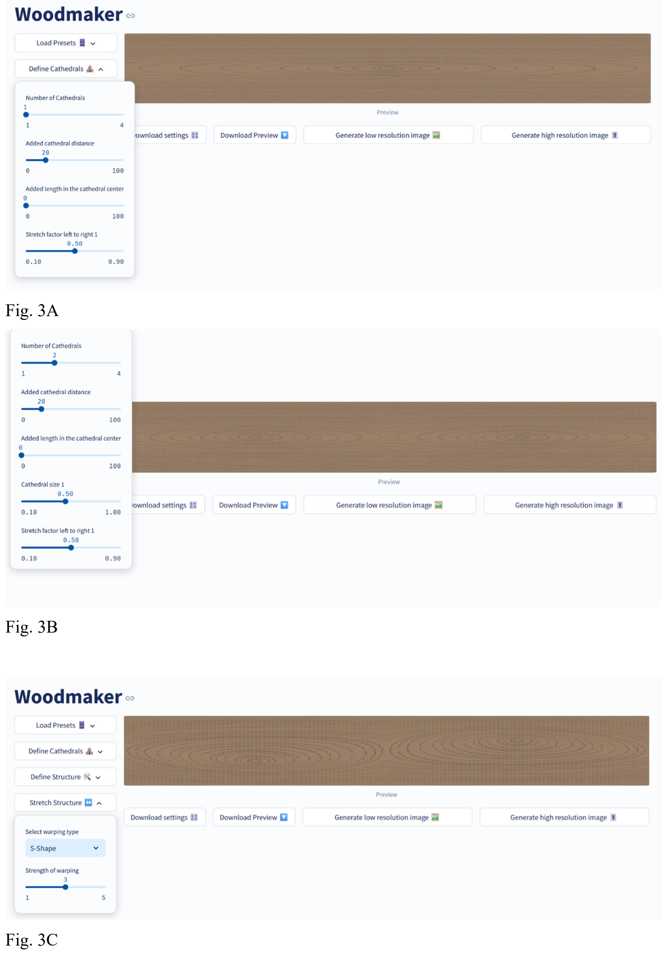

Figure 3A shows an example graphical user interface that can be linked and/or embedded to one algorithm for generating guidance images and/or at least one of the disclosed methods. In this example the target material is wood and the image that is to be generated is a surface of a piece of wood that may serve as furniture.

In the upper left corner, several menu buttons are shown. The uppermost button is "a load presets button", which allows to load the pre-described preset file. The preset file may comprise one or more different characteristics, properties and/or basic features that can serve as parameters that form one part of the input to the one or more machine learning and/or artificial intelligence models. Further below in menu a button is shown giving access to a further menu, which allows the user to define cathedrals for the guidance image, which is shown in the preview window to the right. The user can for example define one or more properties and geometrical relations with respect to the cathedrals (or other features of the target material) such as the number distance of a property of feature to other properties and/or features, such as distance between cathedrals, for example. Also the formation such as stretch of the Cathedral as and/or its center length can be defined, for example.

Figure 3B shows a different example of a guidance image compared to figure 3A, where in figure 3B the guidance image comprises two cathedrals in the world surface compared to one in the example of figure 3A.

Figure 3C shows another detail and/or parameter that can be adjusted via the GUI to create the guidance image with respect to the wooden surveys the warping type can be defined, in this example a S-shaped. Further a strength level can be defined, within a range between 1 and 5.

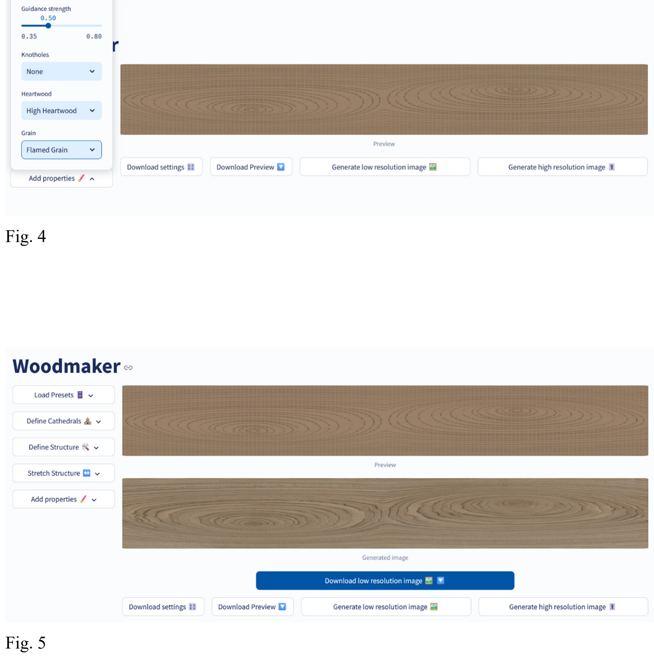

Figure 4 shows another aspect of the UI where additional properties for the production of the generated image can be adjusted by the user. For example the guidance strength can be defined to be between 0.35 and 0.80, which means 35% to 80%. In this case the guidance strength, which corresponds to the denoising value and/or range, is set to 0.5 the generation of a first version of the generated image, in particular a low-resolution version. However, the same UI controller could also be used in the production steps that are used for generating a high-resolution image. For example the overall guidance strength can be used as parameter corresponding to respective the denoising values or value ranges in the respective AI model employed for denoising.

The UI can be used, for example, to guide a user when generating the input comprising one or more input parameters and the guidance input, e.g. the guidance image. Furthermore, the UI may provide feedback with respect to distinct steps of the image generation model, allowing the user a higher degree of control enabling adjustment to the input also on intermediate results. However, the method as described herein can also be implemented as fully/semi automatic or autonomous, for example without any user interaction or user interaction limited to defining the input.

Figure 5 shows the guidance image as well as a low-resolution generated image that could be generated by employing, for example, the method of figure 2A by using the first AI model. This low-resolution generated image can be downloaded as well as the method may continue with generating a high-resolution image in a next step (button "generate high resolution image). Visualizing the low-resolution version of the generated image allows a faster and more efficient feedback with respect to the user, so that necessary adjustments for the production of the high-resolution generated image can be conducted before hand. This allows to save computing time as well as computing resources.

The features disclosed in the description, the claims and the figure may be essential to the disclosure in its various embodiments, either individually or in any combination.

## Claims

1. A computer implemented method for generating an image of an ornamental surface, surface structure and/or a surface model of one or more target materials, the method comprising:
• Providing an input to into one or more trained machine learning and/or artificial intelligence models, the input comprising one or more parameters and a guidance input; and
• Generating, by the one or more trained machine learning and/or artificial intelligence models, a generated image based at least in part on the one or more parameters and the guidance input, wherein at least one of the one or more trained machine learning and/or artificial intelligence models comprises or is associated with at least one diffusion model.

2. The computer implemented method of claim 1, wherein
(i) the one or more trained machine learning and/or artificial intelligence models comprise at least two trained machine learning and/or artificial intelligence models, preferably five or at least five models
(ii) at least one first of, preferably three of, the one or more trained machine learning and/or artificial intelligence models comprises or is a diffusion model, in particular an image diffusion model, especially a text to image diffusion model, preferably Stable Diffusion XL, SDXL, and/or a FLUX diffusion model;
(iii) at least one second of, preferably two of, the one or more trained machine learning and/or artificial intelligence models comprises or is a generative adversarial network, GAN, model; and/or
(iv) the at least two trained machine learning and/or artificial intelligence models are arranged in a cascade, wherein preferably the cascade comprises at least one block, especially two blocks, of a diffusion model, in particular an image diffusion model, preferably SDXL, and/or a FLUX model and an GAN model connected in series and/or the cascade comprises at least one block of two diffusion models, in particular an image diffusion models, preferably SDXL, and/or a FLUX models connected in series, and/or wherein cascade comprises the following series connection of the models: first diffusion model, in particular an image diffusion model, preferably SDXL, and/or a FLUX model, second diffusion model, in particular an image diffusion model, preferably SDXL and/or a FLUX model, first GAN model, third diffusion model, in particular an image diffusion model, preferably SDXL and/or a FLUX model, second GAN model.

3. The computer implemented method of any one of the preceding claims, wherein generating, by the one or more trained machine learning and/or artificial intelligence models, a generated image based at least in part on the one or more parameters and the guidance input comprises:
• denoising of the guidance input; and/or
• encoding, preferably using a Variational Autoencoder ,VAE, prior to feeding the guidance input into the one or more trained machine learning and/or artificial intelligence models, in particular the least one diffusion model; and/or
• decoding the generated image, which is preferably output from the one or more trained machine learning and/or artificial intelligence models, in particular the least one diffusion model, especially using a/the VAE, wherein optionally for the denoising a denoising value is set in in the range of 5% to 90%, preferably 30% to 80%, more preferably 30% to 50%, and/or wherein the denoising value is set to be one of the following: 10%, 20%, 30%, 35%, 40%, 45%, 50% , 60%, 70% and/or 80%, wherein preferably the denoising value determines the degree up to which extend the guidance input can be modified; and/or wherein the denoising value is linked and/or correlated to a guidance strength variable that is preferably one of the one or more parameters and/or in the range of 35% to 80%, more preferably is 50 %.

4. The computer implemented method of any one of the preceding claims, wherein
(i) generating, by the one or more trained machine learning and/or artificial intelligence models, a generated image based at least in part on the one or more parameters and the guidance input comprises:
• a first denoising and/or first refining of the guidance input, the first denoising and/ first refining having preferably a first denoising value and/or range of 30 to 40%, and/or
• a first generating of new details that are added and/or that modify the guidance input based at least on the one or more parameters to produce the generated image, wherein preferably the first denoising and/or refining and/or the first generating is fully or partly conducted and/or provided by a first trained machine learning and/or artificial intelligence model of the one or more trained machine learning and/or artificial intelligence models, the first trained machine learning and/or artificial intelligence model preferably being a diffusion model, in particular an image diffusion model, especially a text to image diffusion model, preferably a SDXL model and/or a FLUX model and/or being trained and/or finetuned on low resolution images of samples of surfaces and/or surface structures of the one or more target material,
(ii) generating, by the one or more trained machine learning and/or artificial intelligence models, a generated image based at least in part on the one or more parameters and the guidance input comprises:
• a first resizing and/or first upscaling of the generated image to a higher resolution, in particular medium resolution;
• a second refining, preferably by a second denoising, of the generated image, the second denoising having preferably a second denoising value in the range of 40 to 50%; and/or
• generating new details that are added and/or that modify the generated image based at least on the one or more parameters of the input; wherein preferably the first resizing and/or first upscaling and/or the second refining is fully or partly conducted and/or provided by the first and/or a second trained machine learning and/or artificial intelligence model of the one or more trained machine learning and/or artificial intelligence models, the second trained machine learning and/or artificial intelligence model preferably being a diffusion model, in particular an image diffusion model, especially a text to image diffusion model, preferably a SDXL model and/or a FLUX model and/or being trained and/or finetuned on patches, regions and/or parts of medium resolution images of samples of surfaces and/or surface structures of the one or more target materials; and/or
(iii) generating, by the one or more trained machine learning and/or artificial intelligence models, a generated image based at least in part on the one or more parameters and the guidance input comprises:
• a second resizing and/or second upscaling of the generated image, preferably by means of an upscaler model, wherein preferably the second resizing and/or second upscaling is fully or partly conducted and/or provided by one or more or all of the previous trained machine learning and/or artificial intelligence model, in particular, the first and/or the second trained machine learning and/or artificial intelligence model and/or provided by a third trained machine learning and/or artificial intelligence model of the one or more trained machine learning and/or artificial intelligence models, the third trained machine learning and/or artificial intelligence model preferably being a GAN model and/or being trained on images of samples of surfaces and/or surface structures of the one or more target materials.

5. The computer implemented method of any one of the preceding claims, wherein
(i) generating, by the one or more trained machine learning and/or artificial intelligence models, a generated image based at least in part on the one or more parameters and the guidance input comprises:
• a third refining of the generated image based at least on the one or more parameters of the input, wherein preferably the third refining is fully or partly conducted and/or provided by one or more or all of the previous trained machine learning and/or artificial intelligence model, in particular, the first, the second and/or the third trained machine learning and/or artificial intelligence model and/or provided by a forth trained machine learning and/or artificial intelligence model of the one or more trained machine learning and/or artificial intelligence models, the fourth trained machine learning and/or artificial intelligence model preferably being a diffusion model, in particular an image diffusion model, especially a text to image diffusion model, preferably a SDXL model and/or a FLUX model and/or being trained and/or finetuned on patches, regions and/or parts of highest available and/or final required resolution images of surface samples of the one or more target materials, and/or
(ii) generating, by the one or more trained machine learning and/or artificial intelligence models, a generated image based at least in part on the one or more parameters and the guidance input comprises:
• a forth and/or final refining, in particular an error handling, especially a pixel error correction, of the generated image, in particular to correct artifact and/or pixel errors occurring due to encoding and/or decoding process(es), wherein preferably the forth and/or final refining is fully or partly conducted and/or provided by one or more or all of the previous trained machine learning and/or artificial intelligence models, in particular, the first, the second, the third, the forth trained machine learning and/or artificial intelligence model and/or provided by a fifth trained machine learning and/or artificial intelligence model of the one or more trained machine learning and/or artificial intelligence models, the fourth trained machine learning and/or artificial intelligence model being a GAN model and/or being trained and/or finetuned on encoded/decoded and/or raw images of samples of surfaces and/or surface structures of the one or more target materials, wherein raw images especially comprise original images, which preferably have not undergone any preprocessing and/or encoding and/or decoding.

6. The computer implemented method of any one of the preceding claims,
(a) wherein the guidance input comprises or consists of one or more guidance images; and/or
(b) wherein the guidance input comprises one or more characteristics, properties and/or basic features of one or more structures, ornaments and/or patterns of the target surface material.

7. The computer implemented method of any one of the preceding claims, wherein the one or more guidance images and/or the guidance input comprises one or more characteristics, properties and/or basic features, the basic features in particular comprising ornaments, one or more patterns, one or more geometrical structures, lines, geometrical features and/or figures, such as circles, ellipses, wave functions and/or the like, and/or local deformations and/or anomalies, wherein the basic features preferably match and/or correspond to characteristics and/or properties of to the one or more target materials.

8. The computer implemented method of claim 6 or 7, wherein
the guidance input further comprises: one or more geometrical relations and/or positions of the one or more basic features, noise added to at least one of the one or more characteristics, properties and/or basic features and/or color values, in particular the desired color output for the generated image.

9. The computer implemented method of claim 6 (a), wherein the one or more guidance image is a square image, especially having a resolution of or at least of 1024*1024 pixels or a non-square image, in particular a rectangular image with especially an aspect ratio of 2:3, 3:2, 3:4, 4:3, 16:9, 9:16 and/or the like or having a resolution of at least or of 1536*640 pixels.

10. The method of any one of the preceding claims,
• wherein the one or more parameters comprise one or more characteristics, properties and/or basic features of one or more structures, ornaments and/or patterns of the target surface material of the one or more target materials and/or one or more target material specifics, wherein the one or more target material specifics preferably comprise at least one of: material type, such as wood or stone, material combination, color, treatment, furnishing, patterns and/or a combination thereof; and/or wherein
• the method further comprises generating a description, preferably from the one or more parameters and/or preferably by combining of one or more parameters and/or one or more keywords, the one or more keywords especially describing one or more parameters, and preferably employing the description in the one or more trained machine learning and/or artificial intelligence models, wherein the description preferably encompasses on or more keywords.

11. The computer implemented method of any one of the preceding claims, wherein
(a) one or more materials of the one or more target materials comprise one or more of: a at least partly or fully processed, furnished and/or treated natural or synthetic material, a natural or synthetic material with at least in part or fully processed, furnished and/or treated surface and/or raw natural or synthetic material and/or a combination thereof, wherein preferably the one or more target materials comprise stone and/or wood, and/or
(b) the method further comprises providing
• a user interface, UI, preferably in form of a graphical user interface, GUI, which is configured to receive and/or generate the guidance input, in particular by means of an algorithm that is configured to generate guidance images from user inputs, and to define one or more parameters for the input;
• a/the user interface comprises a preview function for previewing and/or for comparing generated images provided by one of the one or more machine learning and/or artificial intelligence model, in particular the first, the second, the third, the fourth and/or the fifth machine learning and/or artificial intelligence model and the guidance input, in particular the guidance image; and/or
• a/the user interface comprises an upload and/or download function for the generated image.

12. The computer implemented method of any one of the preceding claims, wherein
(i) the method further comprises:
• Postprocessing, wherein the postprocessing is configured to establish compatibility for further use of the generated image by cleaning artifacts, preferably with GAN-model trained on encoded, decoded and/or raw surfaces images
• Providing the generated image to a database comprising a selection of one or more generated images, preferably produced in accordance with the method of any one of the preceding claims 1 to 11;
• Providing the generated image or at least one generated image of the selection of one or more generated images, preferably upon approval and/or selection by a user and/or automatically, especially from the database, to a printing and/or embossing setup, in particular a printing and/or embossing and/or digital printing machinery, to enable a production of materials and/or one or more products comprising one or more materials, preferably different to the one or more target materials, featuring a surface in accordance or associated with the generated image and/or a surface of the one or more target images, wherein especially the one or more products comprising: products with a decorative character, such as paper, cardboard, plastic film and/or foil, vinyl, flooring, e.g. PVC flooring, furniture, wallpaper, tiles, wood products, glass and/or digitally printed products on a wall, fabric, carpets, metal foil and/or plate; and/or
• Providing the generated image or at least one generated image of the selection of one or more generated images, preferably upon approval and/or selection by a user and/or automatically, especially from the database, to a production machinery and/or production facility for production of rollers for printing and/or embossing machinery, in particular a printing and/or embossing setup, and/or
(ii) the method further comprises: employing the generated image for the production of embossing and/or printing tools, in particular rollers for a printing and/or embossing setup.

13. A data processing device and/or system comprising a processor configured to perform the method of any one of the preceding claims 1 to 12.

14. A computer program product comprising instructions which, when the program is executed by a computer and/or computing system, cause the computer and/or computing system to carry out the method of any one of the preceding claims 1 to 12.

15. A computer-readable medium comprising instructions which, when executed by a computer and/or computing system, cause the computer and/or computing system to carry out the method of any one of the preceding claims 1 to 12.
